# EUROPEAN PATENT APPLICATION

(11) **EP 3 182 647 A1**
(43) Date of publication of application: **21.06.2017**
(21) Application number: 15382639.1
(22) Date of filing: 18.12.2015
(51) Int. Cl.: H04L 12/24, H04L 29/06

(54) **A METHOD TO PERFORM AN OUT-OF-CALL NETWORK QUALITY CONDITIONS ESTIMATION AND COMPUTER PROGRAMS PRODUCTS THEREOF**

(71) Applicant: Telefonica Digital España, S.L.U., 28013 Madrid (ES)
(72) Inventor: Neystadt, John Eugene, 44471 Kfar-Saba (IL); Lantz, Johan, 28013 Madrid (ES)
(74) Representative: Carlos Hernando, Borja

(57) **Abstract**

The method comprising establishing between a software communication application (102) running and a computer server (110) through a network, a communication protocol that allows the software communication application (102) to estimate quality conditions of said network by computing one or more network quality parameters, wherein said communication protocol being an iterative process in which an exchange of UDP packets is executed between the software communication application (102) and the computer server (110) a plurality of times; and implementing a routing protocol, by the software communication application (102), by comparing the computed network quality parameters with predefined quality thresholds, to select to receive an incoming call or to carry out an outgoing call either through a VoIP or through a circuit switched connection.

## Description

### Field of the invention

The present invention generally relates to call optimization methods. In particular, the invention relates to a method and computer programs products to perform an out-of-call network quality conditions estimation to be used by a software communication application in taking rapid call routing decisions for both Voice over IP (VoIP) and circuit switched connections.

### Background of the invention

Document US-A1-20130148525 discloses a method for calculating user experience perception of the quality of monitored integrated telecommunications operator services. For this purpose, data from the monitoring of user services is used, along with questionnaires previously completed by a representative sample of users for subsequent combination by means of correlation algorithms, and after they have been put through automatic learning algorithms, obtaining a value for the quality of the experience, which implies an estimate of the quality of service perceived by the user of said service. Lastly, the network parameters that most affect the QoE as a function of the relevance thereof for predictions of quality are automatically identified in order to provide the values needed to attain a certain quality of experience as defined by the user. Therefore, in this patent application, quality estimation mechanisms such as Mean Opinion Score (MOS) are used in combination with questionnaires to be filed by the users to calculate the quality of monitored integrated telecommunications operator services.

Document US-B2-7372844 discloses a call routing method in VoIP (Voice over Internet Protocol) capable of performing voice service assuring best voice quality is obtained by predicting voice quality using network parameters that affect the voice quality, and then performing a call routing to a gateway with a maximum MOS value out of a gateway group. Also, actively responding to organically changing network environment and providing a best call routing path for the network environment before setting up a call, best voice quality can be provided. Therefore, this patent is related to routing mechanism for VoIP only, not to both VoIP and circuit switched connections.

Apart from that, SIP+RTP/RTCP standard can be also used to estimate call quality. So, in this case it may be argued that all present invention has to do is to establish a silent call to any Interactive Voice Response (IVR) service and use the statistic calculations already available in RTP+RTCP to perform the calculations proposed by present invention. However, some problems arise with the SIP+RTP/RTCP approach. For instance, the signaling part of setting up the call may very well take between 500->1000 msec. In addition, most RTCP statistic algorithms want around 5 seconds to collect transmission data and produce the first report, and there must be an IVR service capable of handling very large numbers of simultaneous dummy calls without adding any unnecessary delay.

Similar problem arises with all complex solutions no matter if they use voice analysis or neural networks as suggested in US-A1-20130148525 and US-B2-7372844 documents, as these solutions must collect and process data and doing that takes time.

It is desirable to provide, therefore, a new method to perform out-of-call network quality estimation to aid a software communication application, such as TuGo®, in taken rapid call routing decisions.

### Description of the Invention

To that end, embodiments of the present invention provide a method to perform an out-of-call network quality conditions estimation, comprising the establishment of a communication protocol between a software communication application running on a computing device of a user and a computer server through a network, the communication protocol allowing the software communication application to estimate network quality conditions by means of computing one or more network quality parameters, and the implementation of a routing protocol, by the software communication application, by comparing the computed network quality parameters with one or more predefined quality thresholds, to select to receive an incoming call or to carry out an outgoing call either through a VoIP or through a circuit switched connection.

According to the proposed method, the communication protocol comprises an iterative process (preferably of an overall duration of about 1 second or even less) which is executed a plurality of times and that comprises an exchange of UDP packets between the software application and the computer server.

According to the proposed method, the network quality parameters may include the following parameters: network jitter, network latency, an indicator representative of the quantity of UDP packets that have been lost, and/or an indicator representative of the number of UDP packets that have been reordered, and the UDP packets may include one or more of the following fields: a sequence number of the packet(s), an indicator relative to the last packet transmitted, and a timestamp.

In accordance with an embodiment, the iterative process is periodically executed every a configured period of time (e.g. every 30 seconds, 1 minutes, 5 minutes, or even longer periods of time).

In accordance with another embodiment, the iterative process is automatically executed when conditions changes in the network are detected by the software communication application.

In accordance with another embodiment, the iterative process is automatically executed upon the software communication application receiving an incoming call or carrying out an outgoing call.

In accordance with yet another embodiment, the iterative process is automatically executed upon the user interacting with a user interface element (e.g. a button) of the software communication application to initiate a call through the software communication application.

In addition, the selected routing option may be presented to the user via a visible and/or an audible signal executed by the software communication application on said computing device. As well, a reasoning of the selected routing option may be also provided to the user.

In accordance with an embodiment, the software communication application advices the user to carry out an outgoing call though a circuit switched connection if the computed one or more network quality parameters are below (or in some cases even equal) a predefined quality threshold(s).

In accordance with an embodiment, the software communication application directly selects to receive an incoming call or to carry out an outgoing call through a circuit switched connection if the one or more computed network quality parameters are below (or in some cases even equal) a predefined quality threshold(s).

In accordance with an embodiment, upon the software communication application has decided to receive an incoming call or to carry out an outgoing call through a VoIP connection, the method comprises directly fallback to a circuit switched connection in case said VoIP connection is not established within a determined period of time (e.g. a few seconds).

In accordance with another embodiment, upon the software communication application has decided to receive an incoming call or to carry out an outgoing call through a VoIP connection, the method comprises computing, by the software communication application, initial configuration parameters of said VoIP connection including a bit rate parameter and/or an echo canceller parameter.

The computed network quality parameters may be also stored in a memory of the software communication application before the routing protocol is implemented.

Moreover, the computed network quality parameters may be used to provide network quality estimation statistics to the user.

Other embodiments of the invention that are disclosed herein include software programs to perform the method embodiment steps and operations summarized above and disclosed in detail below. More particularly, a computer program product is one embodiment that has a computer-readable medium including computer program instructions encoded thereon that when executed on at least one processor in a computer system causes the processor to perform the operations indicated herein as embodiments of the invention.

Therefore, present invention allows managing user calls expectations before and during call establishment, and is able to detect scenarios where a call cannot be connected before it is intended, avoiding so false positives leading to poor user experiences.

In addition, present invention has a reduced cost as it only needs to use a computer server using a minimal amount of bandwidth during a very short time, and provides a fast solution providing the routing results within a timeframe short enough to not affect the user experience.

Besides, the computed parameters can be used to initialize the elements in an audio stack with more optimal values, avoiding starting the call with standard values and taking some time to adapt to the optimal values.

### Brief Description of the Drawings

The previous and other advantages and features will be more fully understood from the following detailed description of embodiments, with reference to the attached drawings, which must be considered in an illustrative and non-limiting manner, in which:
Fig. 1 is a flow diagram illustrating a method to perform an out-of-call network quality conditions estimation according to an embodiment.
Fig. 2 is flow diagram illustrating a communication protocol, established between a software communication application and a computer server through a network, allowing the software communication application to estimate quality conditions of said network by means of computing one or more network quality parameters, in accordance with the present invention.
Fig. 3 is a flow diagram illustrating an embodiment of the proposed method, in particular when the user wants to make a call through the software communication application.
Fig. 4 is a flow diagram illustrating another embodiment of the proposed method; in this case, a call is actively rerouted to a circuit switched connection due to a quality feedback from the software communication application.

### Detailed Description of the Invention and of Preferred Embodiments

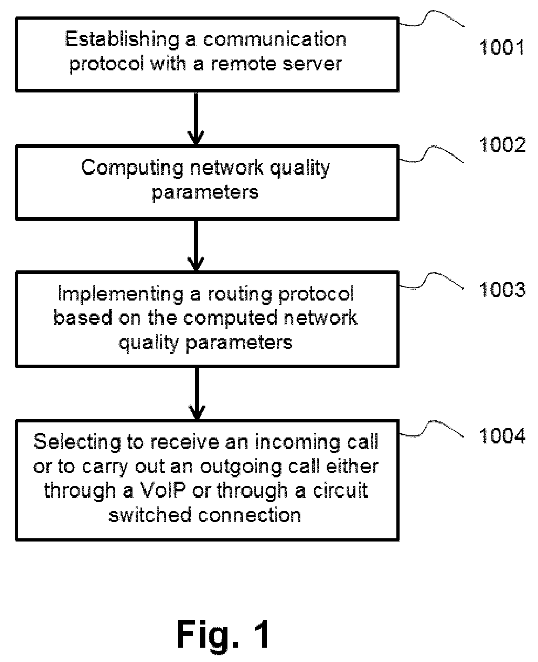

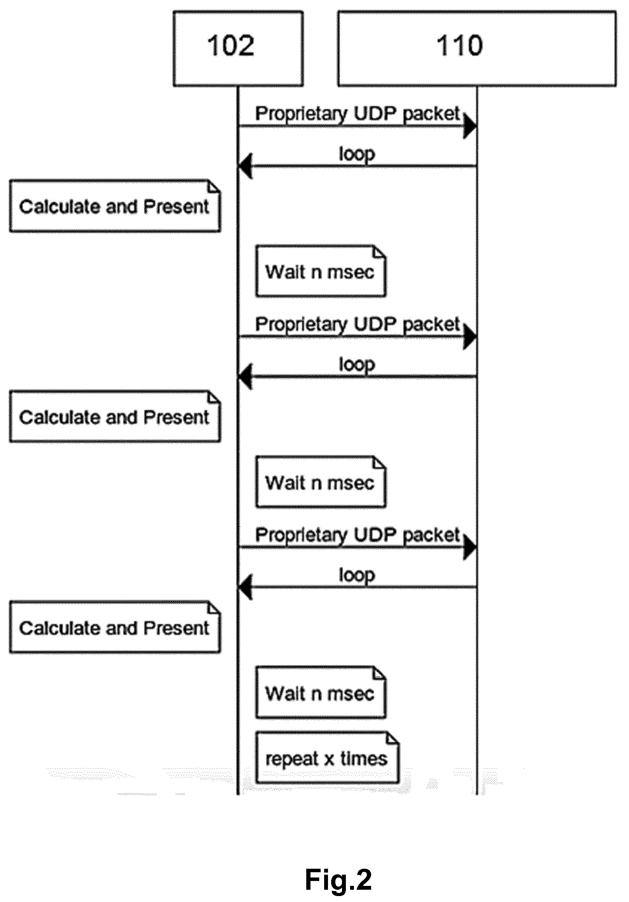

Fig. 1 shows an embodiment of the proposed method. The method, which is implemented by a software communication application 102 (see Fig. 2), starts, step 1001, by establishing a communication protocol with a computer server 110 (see Fig. 2) through a network (not illustrated in the figures) such as Internet, to allow the software communication application 102 to compute, step 1002, one or more network quality parameters. Then, based on this computed network quality parameters, preferably by comparing them with one or more predefined quality thresholds, the software communication application 102 implements, step 1003, a routing protocol to select, step 1004, to receive an incoming call or to carry out an outgoing call either through a VoIP connection or through a circuit switched connection.

According to the present invention, the software communication application 102 (e.g. TuGo®), which is prepared to manage VoIP calls (and in some cases also circuit switched calls), runs on a computing device such as a Smartphone, a PC, a tablet, etc. of a user (not illustrated in the figures) when performing the proposed method.

With reference now to Fig. 2 therein it is illustrated the communication protocol established between the software communication application 102 and the computer server 110, which can be executed by the software communication application 102 at any time to perform the network quality conditions measurements. As may be seen from the figure, the communication protocol involves an iterative process (of an overall duration of about 1 second, or even less time) in which an exchange of UDP packets is executed a plurality of times, e.g. every *n* msec, and a number of times sufficiently large to make a proper estimation and small enough to be presented to the user or the software communication application 102 fast enough to be of use in any routing decision that needs to be taken. It has to be noted that, the more UDP packets that are exchanged, the more precise the results will be, however the communication protocol may be halted at any time.

After each exchange of the UDP packets the software communication application 102 can start to compute at least the following network quality parameters: network jitter, network latency, an indicator representative of the quantity of UDP packets that have been lost, or an indicator representative of the number of UDP packets that have been reordered.

The UDP packets, in accordance with some embodiments, could include: the sequence number of the packet, the last packet indicator (to inform the computer server 110 the connection can be shutdown), and a timestamp. Besides, in other embodiments, the UDP packets could also comprise an indicator stating the communication protocol version, and/or the computer server 110 name.

The computed network quality parameters can then be fed to a quality estimation mechanism such as a MOS algorithm and presented to the user, for instance in a visual and/or audible way, or to the software communication application 102 as an additional information parameter for the routing protocol. This method offers, among other things, the following advantages: the estimated network quality is not affected by latency introduced by a sender's audio computing device such as a recorder buffering, the estimated network quality is neither affected by latency introduced by encoding in the sender side, nor by the decoding on the receiver side; and the requested processing capacity on the computer server 110 is insignificant since no actual processing is performed.

The second part of the proposed method is how these fast network quality conditions estimations (computing of the network quality parameters) are used as input for decisions on which access technology that is optimal for connecting a call. Even though the possible use-cases of the proposed method are versatile, following would be detailed some examples.

### Pre outgoing call manual routing decision

The iterative process of the proposed communication protocol can be periodically executed every a configured period of time or, alternatively, when condition changes in the network are detected by the software communication application 102. By doing this a fair estimation of the current network conditions can be maintained up to date and the user can be advised to avoid a mean of establishing a call through a VoIP connection if other better options are available (such as making the call over the circuit switched network). This might be indicated to the user by a user interface element (visual and/or audible) of the software communication application 102 or presented to the user upon the user interacting with a user interface element (e.g. a call button) of the software communication application 102 when starting the call.

In this example, the proposed method is used both for determining poor network link conditions as well as conditions where the call would be impossible to complete due to network infrastructure restrictions (for instance in the case where signaling can be properly performed over predefined TCP ports while UDP traffic is blocked).

For instance when a connection type change is detected in the computing device, such as a change from 3G to WIFI, the communication protocol is executed. If it is detected that signaling is operational but no UDP traffic is allowed to go through, the user can be directed to the native dialer instantly when trying to initiate a call from the software communication application 102. A brief explanation about the reason for this can be provided by the software communication application 102 to the user without delay, instead of the user trying to make a call that will indeed connect to a remote peer but will never have any working audio. In these scenarios present invention allows the software communication application 102 to advise and even force the user to make the call using the circuit switched connection (if available) instead of placing the call through VoIP.

Performing this verification on connection type changes will significantly improve the user experience and reduce the amount of false positives (working signaling but no media).

### Outgoing call manual routing decision

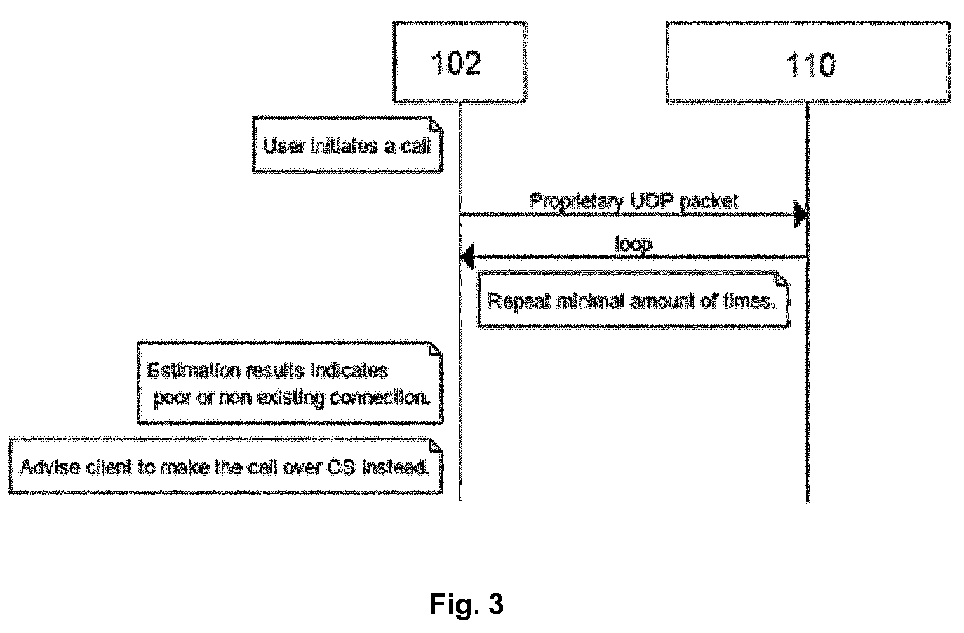

Thanks to the speed of the proposed communication protocol, as said before, it can even be executed in the very moment when the user interacts with a call button of the software communication application 102, if the network quality conditions are determined to not provide a good user experience, the user can be advised to establish the call over a circuit switched connection (Fig. 3), instead of having a bad experience in the software communication application 102. The advantage of this scenario is that even though the current connection might allow UDP packets to be exchanged, the current network link is so bad that the quality of the call would be unacceptable. In this scenario the user should be advised to use the circuit switched connection instead, if available.

### Incoming call on the fly routing decisions

In some scenarios (e.g. a multi Radio Access Technology device supporting both WIFI and cellular radio networks) an incoming call might be routed either as a VoIP connection using the packet switched network or as a regular call over the circuit switched network. If the mobile operator is looking to offload the circuit switched part of the network he will attempt to connect the call over packet switched first and fallback to circuit switched only if needed. Normally the fallback to circuit switched connection will take place if the packet switched connection is not established within the given time budget in order to not lose the call.

However, another case which must be considered is that the call might be connected to a packet switched destination that is capable of completing the call setup signaling but unable to establish media or not provide a connection that will offer media of good enough quality. The destination might be able to make some decisions based on the current state of the computing device such as to not accept calls when on a 2G connection or similar. However, camping on a WIFI or fast cellular connection is no guarantee that the call will have good quality or even that media packets are allowed to exchange.

In this scenario, it is possible that a call control service 90 in the network will repeatedly try to connect calls to a destination, via a SIP server 91, which will try to connect all calls, but every one of them will keep failing in the media part. This situation triggers an unacceptable user experience where calls keeps connecting but are providing poor or no media. Hence, the only solution for this is to have a super-fast way to probe the connection before accepting or rejecting the incoming call. Since the destination is on a very tight time budget to make this decision, the time restrictions for the probing method are extreme, excluding most options suggested in the prior art. On the contrary, with the proposed method, the software communication application 102 can take active part in the routing decision based on their real connectivity situation.

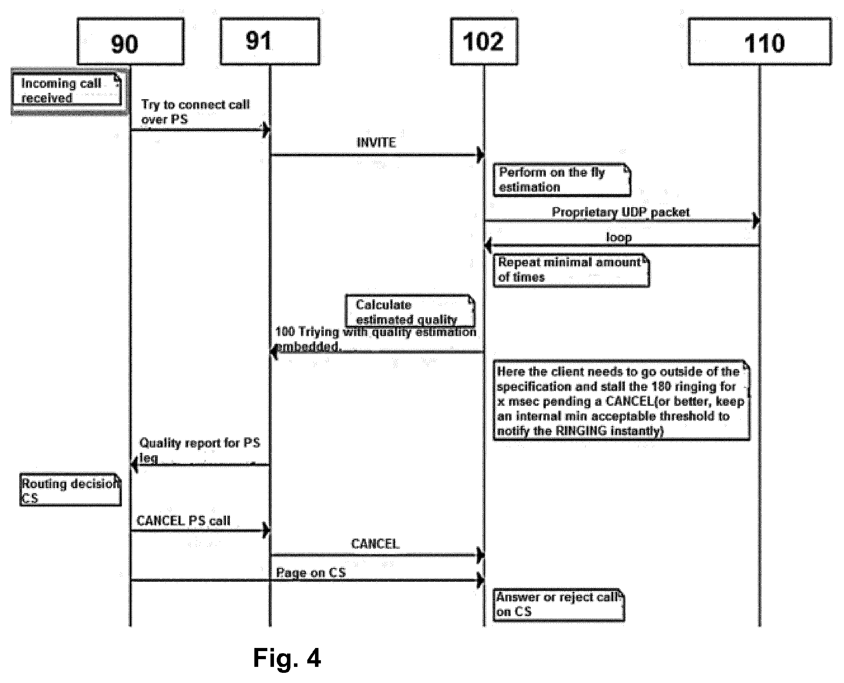

In Fig. 4 it is illustrated an embodiment where the software communication application 102 is taking active part of the routing decision long before the packet switched routing timeout would occur, thus ensuring the fallback solution (route the call to circuit switched connection) is applied faster and at the same time avoiding a poor user experience.

### Incoming call pre-measurement decisions

In this example, if there are recent quality estimations stored in the software communication application 102 (e.g. in a memory thereof), the software communication application 102 may decide to instantly reply to the call control 90 advising against connecting the call through this channel. The call control 90 may then decide to proceed anyway or choose another channel if available. This is especially relevant in the cases where the software communication application 102 knows in advance that the computing device is camping on a WIFI or mobile network that does not allow the UDP data packets needed for the call to pass through. In these scenarios the software communication application 102 can choose to either instantly reply with for instance a pre-defined SIP error code or embed the quality information (the computed network quality parameters) in the provisional response and let the call control make the final routing decision.

### Initial audio chain parameter estimations

If the call is to be established over the packet switched connection, the computed network quality parameters can also be used for computing initial configuration parameters for the VoIP connection. For instance, to define an initial bit rate parameter of the codec that will be used in the call. Even though the codec might have an implicit VBR mode like Opus, being able to quickly set an initial bit rate threshold, this will help to provide optimal quality earlier in the call compared to collecting statistics in call and adapt them accordingly. In addition, the computed network quality parameters could be also used to provide initial parameters for the echo canceller.

While the foregoing is directed to embodiments of the present invention, other and further embodiments of the invention may be devised without departing from the basic scope thereof. For example, other aspects may be implemented in hardware or software or in a combination of hardware and software.

Additionally, the software programs included as part of the invention may be embodied in a computer program product that includes a non-transitory computer useable medium. For example, such a computer usable medium can include a readable memory device, such as a hard drive device, a flash memory device, a CD-ROM, a DVD/ROM, or a computer diskette, having computer readable program code segments stored thereon. The computer readable medium can also include a communications link, either optical, wired, or wireless, having program code segments carried thereon as digital or analog signals.

The scope of the present invention is determined by the claims that follow.

## Claims

1. A method to perform an out-of-call network quality conditions estimation, said method comprising:
- establishing between a software communication application (102) running on a computing device of a user and a computer server (110) through a network, a communication protocol that allows the software communication application (102) to estimate quality conditions of said network by means of computing one or more network quality parameters, wherein said communication protocol being an iterative process in which an exchange of UDP packets is executed between the software communication application (102) and the computer server (110) a plurality of times; and
- implementing a routing protocol, by the software communication application (102), by comparing the computed one or more network quality parameters with predefined quality thresholds, to select to receive an incoming call or to carry out an outgoing call either through a VoIP connection or through a circuit switched connection.

2. The method of claim 1, wherein the iterative process being periodically executed every a configured period of time.

3. The method of claim 1, wherein the iterative process being automatically executed when conditions changes in the network are detected by the software communication application (102).

4. The method of claim 1, wherein the iterative process being automatically executed upon the software communication application (102) receiving an incoming call or carrying out an outgoing call

5. The method of claim 1, wherein the iterative process being automatically executed upon the user interacting with a user interface element of the software communication application (102) to initiate a call through the software communication application (102).

6. The method of any of previous claims, further comprising presenting the selected routing option to the user via a visible and/or an audible signal.

7. The method of claim 1, wherein the routing protocol comprises firstly selecting to receive an incoming call or to carry out an outgoing call through a VoIP connection and directly fallback to a circuit switched connection in case the VoIP connection is not established within a determined period of time.

8. The method of claim 1, wherein the software communication application (102) advices the user to carry out an outgoing call though a circuit switched connection if the computed one or more network quality parameters are below a predefined quality threshold(s).

9. The method of claim 1, wherein the software communication application (102) directly selects to receive an incoming call or to carry out an outgoing call through a circuit switched connection if the one or more computed network quality parameters are below a predefined quality threshold(s)

10. The method of claim 1, wherein the computed network quality parameters are stored in a memory of the software communication application (102) before the routing protocol is implemented.

11. The method of claim 1, wherein the routing protocol comprises firstly selecting to receive an incoming call or to carry out an outgoing call through a VoIP connection and the method further comprising computing, by the software communication application, (102), initial configuration parameters for said VoIP connection including a bit rate parameter and/or an echo canceller parameter.

12. The method of any of previous claims, wherein the iterative process has a duration of 1 second, or less.

13. The method of claim 1, wherein the network quality parameters includes at least one of a network jitter, a network latency, an indicator representative of the quantity of UDP packets that have been lost, or an indicator representative of the number of UDP packets that have been reordered.

14. The method of claim 1, wherein the UDP packets includes one or more of the following fields: a sequence number of the packet(s), an indicator relative to the last packet transmitted, and a timestamp.

15. A computer program product comprising executable instructions that, when executed by one or more processors of a computer system, cause the computer system to perform the method of any one of the preceding claims.
